# EUROPÄISCHE PATENTSCHRIFT

(11) **EP 0 409 063 B1**
(45) Veröffentlichungstag und Bekanntmachung des Hinweises auf die Patenterteilung: **17.03.1993**
(21) Anmeldenummer: 90113253.0
(22) Anmeldetag: 11.07.1990
(51) Int. Cl.: B60T 8/00, B60T 15/04, B60T 17/22

(54) **Verfahren zur Erfassung der Betätigung einer Feststellbremse eines frontgetriebenen Kraftfahrzeuges bei betätigtem Fahrpedal**
Procedure for measuring the actuation of a parking brake of a front-driven vehicle with actuated accelerator pedal
Procédé d'évaluation d'actionnement du frein de stationnement d'un véhicule entraîné par l'axe avant avec pédale d'accélération en action

(30) Priorität: 15.07.1989 DE 3923534
(43) Veröffentlichungstag der Anmeldung: 23.01.1991
(73) Patentinhaber: Hella KG Hueck & Co., 59552 Lippstadt (DE)
(72) Erfinder: Höver, Norbert, D-4780 Lippstadt (DE)

(56) Entgegenhaltungen:
- EP-A- 0 149 070
- DE-A- 3 618 532
- GB-A- 2 192 034

## Beschreibung

Verfahren zur Erfassung der Betätigung einer Feststellbremse eines frontgetriebene Kraftfahrzeuges bei betätigtem Fahrpedal.

Die Erfindung betrifft ein Verfahren zur Erkennung der Betätigung einer Feststellbremse eines frontgetriebenen Kraftfahrzeuges bei betätigtem Fahrpedal.

Aus der europäischen Patentanmeldung 0 249 431 ist ein derartiges Verfahren vorbekannt. Dort ist zur Erkennung der Betätigung der Feststellbremse ein Schalter an der Feststellbremse vorgesehen, der seinen Schaltzustand wechselt, wenn die Feststellbremse betätigt wird. Wird die Betätigung der Feststellbremse erkannt, so wird die dort vorgesehene Antriebsschlupfregelung abgeschaltet.

Das vorbekannte Verfahren weist jedoch Nachteile auf. Die Einbautoleranzen von Schaltern von Feststellbremsen sind sehr groß, so daß auch bei Betätigung der Feststellbremse der Schalter seinen Schaltzustand nicht unbedingt wechselt. Dies kann zu einer Fehlerkennung der Betätigung der Feststellbremse und zu einem Fehlverhalten z. B. der nachgeschalteten Antriebsschlupfregelung führen.

Auch die Abschaltung der Antriebsschlupfregelung im Falle des Erkennens der Betätigung der Feststellbremse kann zu Schwierigkeiten führen, da in diesem Fall auch z. B. beim Driften des Kraftfahrzeugs durch Kurven keine Antriebsschlupfregelung mehr zur Verfügung steht. Jedoch gerade bei derartigen extremen Fahrsituationen des Kraftfahrzeuges kann die Antriebsschlupfregelung von besonderem Vorteil sein.

Die Erfindung hat die Aufgabe ein Verfahren zur Erkennung der Betätigung einer Feststellbremse zu schaffen, bei dem kein Schalter an der Feststellbremsbetätigung erforderlich ist.

Diese Aufgabe wird erfindungsgemäß dadurch gelöst, daß die Beschleunigungen der angetriebenen Räder gemessen werden, daß die Beschleunigung eines nicht angetriebenen Rades, auf das die Feststellbremse wirkt, gemessen wird, daß die Beschleunigung der angetriebenen Räder mit einem ersten negativen Schwellwert verglichen wird, daß die Beschleunigung des nicht angetriebenen Rades mit einem zweiten negativen Schwellwert verglichen wird, der kleiner ist als der erste Schwellwert und daß die Betätigung der Feststellbremse erkannt wird, wenn die Beschleunigung aller angetriebenen Räder größer ist als der erste Schwellwert und wenn die Beschleunigung des nicht angetriebenen Rades kleiner ist als der zweite Schwellwert.

Die Erfindung macht sich die Erkenntnis zu nutze, daß im Falle des Betätigens der Feststellbremse bei weiterhin betätigtem Fahrpedal des Kraftfahrzeuges durch den Bremseingriff die nicht angetriebenen Räder, auf die die Feststellbremse wirkt, auf Untergründen mit niedrigem Reibwert nahezu abrupt zum Stehen kommen, wogegen die angetriebenen Räder weiterhin mit der Kraft der Brennkraftmaschine des Kraftfahrzeuges beaufschlagt sind. Diese Erkenntnis führt zu der Lösung des erfindungsgemäßen Verfahrens, daß die Beschleunigungen der angetriebenen Räder und eines nicht angetriebenen Rades, auf das die Feststellbremse wirkt, gemessen werden. Im Anschluß daran werden die gemessenen Beschleunigungen der angetriebenen Räder mit einem ersten negativen Schwellwert verglichen und wird die Beschleunigung des nicht angetriebenen Rades mit einem zweiten negativen Schwellwert verglichen, wobei der zweite Schwellwert kleiner ist als der erste Schwellwert. Die Wahl der genannten Schwellwerte erfolgt deshalb in der beanspruchten Form, weil bei Betätigung der Feststellbremse die meßbare, negative Beschleunigung an dem nicht angetriebenen Rad vergleichsweise größer ist als die meßbare, negative Beschleunigung an den angetriebenen Rädern, die sogar weiterhin leicht positiv sein kann.

Erfindungsgemäß wird die Betätigung der Feststellbremse genau dann erkannt, wenn die Beschleunigung aller angetriebenen Räder größer ist als der erste negative Schwellwert und wenn die Beschleunigung des nicht angetriebenen Rades kleiner ist als der zweite negative Schwellwert. Gleichzeitig muß das Fahrpedal getreten sein.

Das erfindungsgemäße Verfahren hat gegenüber dem Vorbekannten den Vorteil, daß kein Schalter an der Handbremsbetätigung erforderlich ist. Vielmehr wird die Betätigung der Feststellbremse allein durch entsprechende Drehzahlsensoren an den angetriebenen Rädern und an einem nicht angetriebenen Rad auf das die Feststellbremse wirkt, ermittelt. Die für die Durchführung des erfindungsgemäßen Verfahrens erforderlichen Raddrehzahlsensoren sind insbesondere dann, wenn das beschriebene Verfahren für Antriebsschlupfregelungen verwendet wird, schon vorhanden, so daß häufig für die Durchführung des erfindungsgemäßen Verfahrens kein zusätzlicher Aufwand erforderlich ist. Das erfindungsgemäße Verfahren ist gegenüber dem Vorbekannten sicherer, weil z. B. die Justage der Raddrehzahlsensoren anders als die Justage eines Schalters an der Handbrems- oder Feststellbremsbetätigung unkritisch ist.

Das genannte Verfahren funktioniert auch bei der z. B. im Rallye-Sport üblichen Fahrtechnik des sogenannten Linksbremsens bei frontgetriebenen Fahrzeugen. Hier wird bei gleichseitigem Betätigen des Fahrpedals die Betriebsbremse des Kraftfahrzeugs meist mit dem linken Fuß soweit betätigt, daß die Hinterräder blockieren, während das Antriebsmoment an den Vorderrädern ein Blockieren derselben verhindert. Damit wird der gleiche Effekt wie beim Arbeiten mit der Handbremse erreicht, das heißt, ein gezieltes Driften des Kraftfahrzeuges in Kurven.

Vorteilhafte Ausgestaltungen und Weiterbildungen des erfindungsgemäßen Verfahrens gehen aus den Unteransprüchen hervor.

Es ist besonders vorteilhaft, wenn die Beschleunigung aller nicht angetriebenen Räder gemessen wird, auf die die Feststellbremse wirkt, wenn die Beschleunigungen dieser nichtangetriebenen Räder mit dem zweiten Schwellwert verglichen werden und wenn die Betätigung der Feststellbremse erkannt wird, falls die Beschleunigung eines nicht angetriebenen Rades kleiner ist als der zweite Schwellwert. Mit diesen Maßnahmen ist es möglich, z. B. die Wirkung einer ungleichmäßig wirkenden Handbremse auszuschließen. Eine ungleichmäßig wirkende z. B. auf beide Hinterräder wirkende Feststellbremse kann dazu führen, daß bei Betätigung der Feststellbremse die Bremswirkung an einem der Hinterräder wesentlich größer ist als an dem anderen Hinterrad. Dieser zu möglichen Fehlerkennungen der Handbremsbetätigung führende Fehler kann mit den beschriebenen Maßnahmen ausgeschlossen werden.

Es ist weiterhin vorteilhaft, wenn der erste Schwellwert etwa -0,2 g beträgt und wenn der zweite Schwellwert etwa -0,5 g beträgt, wobei g die Erdbeschleungigung ist. Es hat sich gezeigt, daß bei Betätigung der Feststellbremse die Räder auf die die Feststellbremse wirkt in nahezu jedem Falle der zweite Schwellwert von etwa -0,5 g unterschritten wird. Andererseits wird bei einer derartigen Abbremsung des Kraftfahrzeuges allein über die Feststellbremse auf die nicht angetriebenen Räder wirkend der erste Schwellwert von etwa -0,2 g an den angetriebenen Rädern des Kraftfahrzeuges nicht unterschritten.

Um nach der Erfassung der Betätigung der Feststellbremse auch das Lösen der Feststellbremse sicher erkennen zu können, ist es vorteilhaft, wenn die Beschleunigungen des oder der nicht angetriebenen Räder mit einem dritten positiven Schwellwert verglichen werden und wenn das Lösen der Feststellbremse erkannt wird, wenn die Beschleunigung eines nicht angetriebenen Rades größer ist als der dritte Schwellwert. Mit diesen Maßnahmen macht man sich die Erkenntnis zu nutzte, daß beim Lösen der Feststellbremse während der Bewegung des Kraftfahrzeuges die an den nicht angetriebenen, durch die Feststellbremse vorher gebremsten Rädern auftretenden Beschleunigungen einen vergleichsweise großen Beschleunigungswert annehmen.

In diesem Zusammenhang ist es vorteilhaft, wenn das Lösen der Feststellbremse erkannt wird, wenn die Beschleunigung des nicht angetriebenen Rades, dessen Beschleunigung beim Erkennen der Betätigung der Feststellbremse kleiner war als der zweite Schwellwert, nunmehr größer ist als der dritte Schwellwert. Mit dieser Maßnahme erfolgt eine quasi kausale Zuordnung der Erkennung des Lösens der Feststellbremse zu dem nicht angetriebenen Fahrzeugrad, auf das die Feststellbremse wirkt und bei dem die Messung der Beschleunigung zum Erfassen der Betätigung der Feststellbremse zum Erkennen der Betätigung der Feststellbremse geführt hat. Mit dieser Maßnahme ist wiederrum eine Erfassung des sogenannten ungleichmäßigen "Ziehens" der Feststellbremse möglich, so daß die ungleichmäßige Bremswirkung der Feststellbremse auf die nicht angetriebenen Räder nicht zu einer Falscherfassung des Lösens der Feststellbremse führen kann.

Es ist vorteilhaft, wenn der dritte Schwellwert etwa 1 g beträgt, wobei g die Erdbeschleunigung ist. Es hat sich gezeigt, daß üblicherweise beim Lösen der Feststellbremse während der Fahrt des Kraftfahrzeuges der genannte dritte Schwellwert durch die Beschleunigung an den nicht angetriebenen vorher gebremsten Rädern überschritten wird.

Das Lösen der Feststellbremse kann auch dadurch erkannt werden, wenn die Geschwindigkeiten aller Räder oder deren Mittelwert kleiner ist als ein vorgegebener vierter Schwellwert. Es wird dann davon ausgegangen, daß das Fahrzeug steht oder sehr langsam rollt, so daß das Erkennen der Betätigung der Feststellbremse aufgehoben werden kann. Als vierten Schwellwert kann man vorteilhaft einen Geschwindigkeitswert von etwa 4 km/h ansetzten. Dies entspricht etwa der Fußgängergeschwindigkeit.

Es ist besonders vorteilhaft, das erfindungsgemäße Verfahren bei einer Antriebsschlupfregelung für Kraftfahrzeuge zu verwenden, weil ohne weitere Maßnahmen zur Berücksichtigung der Betätigung von Feststellbremsen die Abbremsung der nicht angetriebenen Räder durch die Feststellbremse zu einem Verlust des Geschwindigkeitssignals führt, das als Referenzsignal aus den nicht angetriebenen Rädern gewonnen wird. Dies führt ohne weitere Maßnahmen zu einer nahezu vollständigen Reduzierung der Motorleistung des Kraftfahrzeuges, auch dann wenn der Bediener des Kraftfahrzeuges das Fahrpedal voll durchtritt und möglicherweise, falls vorgesehen, zu einer vollständigen Betätigung der Betriebsbremse des Kraftfahrzeuges. Die beschriebenen Wirkungen sind üblicherweise nicht erwünscht, wie auch aus der eingangs zum Stand der Technik genannten europäischen Patentanmeldung 0 249 431 hervorgeht.

In diesem Zusammenhang ist es vorteilhaft, wenn die Geschwindigkeit eines nicht angetriebenen Rades gemessen wird, wenn im Falle des Erkennens der Feststellbremse die vor einer Betätigung der Feststellbremse gemessene Geschwindigkeit des nicht angetriebenen Rades abgespeichert wird und als Referenzgeschwindigkeit des Kraftfahrzeuges für die Antriebsschlupfregelung verarbeitet wird. Mit diesen Maßnahmen wird entgegen den Ausführungen in der europäischen Patentanmeldung 0 249 431 die Antriebsschlupfregelung des Kraftfahrzeuges bei Betätigung der Feststellbremse nicht ausgeschaltet. Vielmehr wird, sobald erkannt wurde, daß die Feststellbremse betätigt ist, das vor der Betätigung der Feststellbremse gemessene Geschwindigkeitssignal des nicht angetriebenen Rades in einem Speicher abgespeichert und dient während der Betätigung der Feststellbremse als Referenzgeschwindigkeit des Kraftfahrzeuges für die Antriebsschlupfregelung.

Dies hat den Vorteil, daß z. B. dann wenn der Bediener des Kraftfahrzeuges das Fahrpedal des Kraftfahrzeuges durchtritt und die Feststellbremse betätigt, um z. B. mit einem entsprechenden Driftwinkel durch eine Kurve hindurchzufahren, die Antriebsschlupfregelung mit den beschriebenen Maßnahmen weiterhin wirksam wird. Dies hat den Vorteil, daß in diesen besonders extremen Fahrsituationen, bei denen die Antriebsschlupfregelung von besonderem Vorteil ist, die Antriebsschlupfregelung auch wirklich wirksam ist und nicht wie beim Vorbekannten einfach abgeschaltet wird.

In diesem Zusammenhang ist es weiterhin vorteilhaft, wenn der Mittelwert der gemessenen Geschwindigkeiten aller nicht angetriebenen Räder gebildet wird, um eine möglichst aussagekräftige Information über die tatsächliche Geschwindigkeit des Kraftfahrzeuges zu erlangen.

Es ist weiterhin besonders vorteilhaft, wenn im Falle des Erkennens des Lösens der Feststellbremse die abgespeicherte Referenzgeschwindigkeit gelöscht wird und die gemessene Geschwindigkeit des nicht angetriebenen Rades als Referenzgeschwindigkeit des Kraftfahrzeuges für die Antriebsschlupfregelung verwendet wird. Wie vorher beschrieben wird im Falle der Betätigung der Feststellbremse als Referenzgschwindigkeit des Kraftfahrzeuges für die Antriebsschlupfregelung die Geschwindigkeit des nicht angetriebenen Rades vor Betätigung der Feststellbremse abgespeichert. Wird nun die Feststellbremse gelöst, so ist es nicht mehr erforderlich, diese abgespeicherte Geschwindigkeit als Referenzgeschwindigkeit zu wählen, weil nunmehr wieder ein pausibles und auswertbares Geschwindigkeitssignal an den nicht angetriebenen Rädern des Kraftfahrzeuges gemessen werden kann. In diesem Falle kann die gemessene Geschwindigkeit des nicht angetriebenen Rades nach Lösen der Feststellbremse als Referenzgeschwindigkeit des Kraftfahrzeuges für die Antriebsschlupfregelung verwendet werden.

Ein Ausführungsbeispiel des erfindungsgemäßen Verfahrens ist in den Zeichnungen dargestellt und wird im folgenden anhand der Zeichnungen näher erläutert.

Es zeigen
Figur 1 schematisch ein Kraftfahrzeug mit Antriebsschlupfregelung, bei dem das erfindungsgemäße Verfahren angewendet wird.
Figur 2 ein Flußdiagramm des bei der Antriebsschlupfregelung gemäß Figur 1 verwendeten Verfahrensablaufs zur Erfassung der Betätigung einer Feststellbremse und
Figur 3 Geschwindigkeitszeit und Beschleunigungszeitdiagramme zur weiteren Erläuterung der Funktion des erfindungsgemäßen Verfahrens.

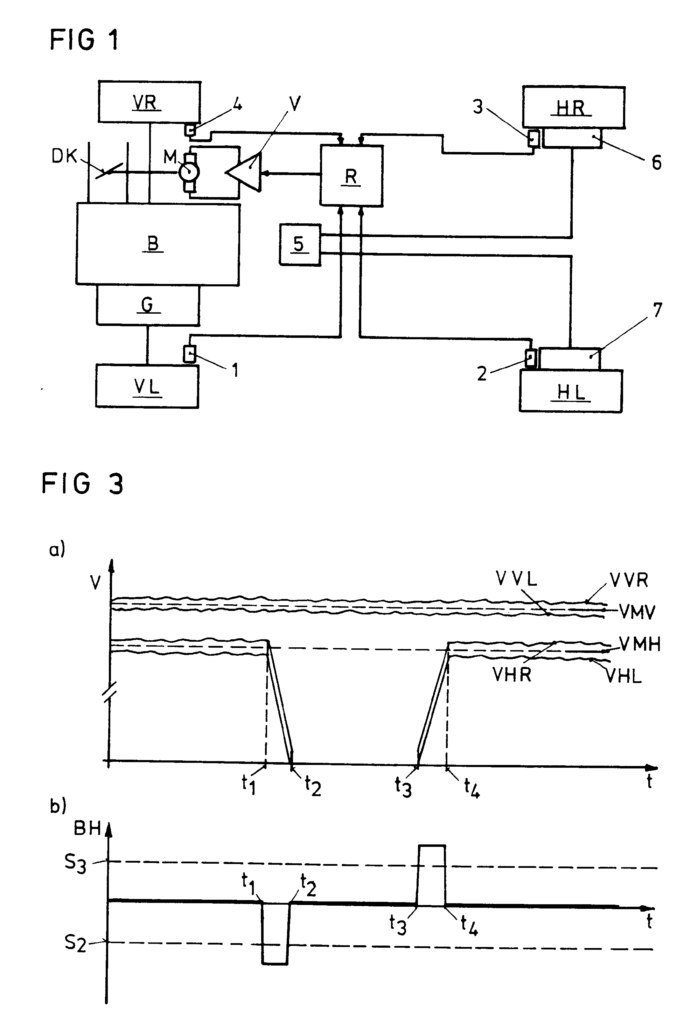

In Figur 1 weist das schematisch dargestellte Kraftfahrzeug eine Brennkraftmaschine (B) auf, die über ein Getriebe (G), ein rechtes Vorderrad (VR) und ein linkes Vorderrad (VL) antreibt. Weiterhin weist das Kraftfahrzeug gemäß Figur 1 ein rechtes Hinterrad (HR) und ein linkes Hinterrad (HL) auf, die nicht angetrieben sind durch die Brennkraftmaschine (B). Das Kraftfahrzeug weist weiterhin eine Feststellbremsbetätigung (5) auf, die über eine erste Bremse (6) auf das rechte Hinterrad (HR) und über eine zweite Bremse (7) auf das linke Hinterrad (HL) wirkt. Dem linken Vorderrad (VL) ist ein erster Raddrehzahlfühler (1), dem linken Hinterrad ist ein zweiter Raddrehzahlfühler (2), dem rechten Hinterrad (HR) ist ein dritter Raddrehzahlfühler (3) und dem rechten Vorderrad (VR) ein vierter Raddrehzahlfühler (4) zugeordnet, deren Drehzahlsignale einer Regeleinrichtung (R) zugeführt werden, die als Antriebsschlupfregeleinrichtung ausgebildet ist. Die Antriebsschlupfregeleinrichtung (R) erzeugt ein Ausgangssignal, das über einen Verstärker (V) einen elektrischen Stellmotor (M) steuert, der seinerseits mit einer Drosselklappe (DK) der Brennkraftmaschine wirkverbunden ist.

Die Funktion derartiger Antriebsschlupfregeleinrichtungen (R) ist z. B. aus der europäischen Patentanmeldung 0 249 431 vorbekannt. Aus den Raddrehzahlsignalen des zweiten Raddrehzahlfühlers (2) und des dritten Raddrehzahlfühlers (3) an den nicht angetriebenen Hinterrädern (HR, HL) wird ein Referenzgeschwindigkeitssignal gebildet, das die tatsächliche Geschwindigkeit des Kraftfahrzeuges über Grund repräsentiert. Die über den ersten Raddrehzahlfühler (1) und den vierten Raddrehzahlfühler (4) gemessenen Geschwindigkeiten der angetriebenen Vorderräder (VL, VR) werden mit dieser Referenzgeschwindigkeit verglichen. Sobald ermittelt wird, daß eine der gemessenen Radgeschwindigkeiten oder beide gemessenen Radgeschwindigkeiten an den Vorderrädern den Referenzwert um einen vorgegebenen Referenzwert überschreiten, so wird dies als Durchdrehen eines oder beider angetriebenen Räder interpretiert und die Antriebsschlupfregeleinrichtung (R) wird derart wirksam, daß über den Verstärker (V) der Stellmotor (M) in dem Sinne angesteuert wird, daß sich die Drosselklappe (DK) schließt und die Leistungsabgabe der Brennkraftmaschine (B) vermindert wird. Es sind auch Antriebsschlupfregeleinrichtungen bekannt, bei denen fakultativ oder zusätzlich die an Kraftfahrzeugen vorhandene Betriebsbremse durch die Antriebsschlupfregeleinrichtung (R) betätigt wird.

Sobald die Antriebsschlupfregeleinrichtung (R) über die gemessenen Raddrehzahlen ermittelt, daß die Geschwindigkeit der angetriebenen Vorderräder (VR, VL) in etwa wider der Geschwindigkeit der nicht angetriebenen Hinterräder (HR, HL) entspricht, wird die Verstärkerschaltung (V) derart angesteuert, daß der Stellmotor (M) die Drosselklappe (DK) wieder öffnet, um die Leistungsabgabe der Brennkraftmaschine entsprechend der Vorgabe durch den Bediener des Kraftfahrzeuges wieder zu erhöhen. Bei Betätigung der Feststellbremse durch Angriff des Bedieners in die Handbremsbetätigung (5) und Greifen der ersten Bremse (6) und der zweiten Bremse (7) ergibt sich nun folgendes Problem. Mit Betätigung der Feststellbremse werden die Hinterräder (HR, HL) nahezu abrupt abgebremst was zu entsprechend verminderten Raddrehzahlsignalen der Raddrehzahlfühler (2 und 3) führt. Das heißt, im Moment der Handbremsbetätigung repräsentieren die über die gemessenen Raddrehzahlen der Hinterräder (HR, HL) gemessenen Radgeschwindigkeiten nicht mehr die tatsächliche Geschwindigkeit des Kraftfahrzeuges über Grund. Die Antriebsschlupfregeleinrichtung (R) ermittelt daraus fälschlich ein Durchdrehen der Vorderräder (VR, VL) und betätigt demgemäß über den Verstärker (V) und den Stellmotor (M) die Drosselklappe im Sinne einer Verminderung der Leistungsabgabe der Brennkraftmaschine (B).

Das heißt, auch wenn der Bediener des Kraftfahrzeuges z. B. durch volles Niederdrücken des Fahrpedals die maximale Leistung der Brennkraftmaschine (B) abfordert, so wird im Falle des Anziehens der Feststellbremse die Drosselklappe (DK) als Leistungsstellglied der Brennkraftmaschine (B) voll geschlossen, um das vermeintliche Durchdrehen der angetriebenen Vorderräder (VR, VL) zu beheben. Mit dieser Fehlfunktion der Antriebsschlupfregelung (R) ist es z. B. einem sportlich veranlagten Fahrer des Kraftfahrzeuges nicht möglich, mit nahezu voller Leistung der Brennkraftmaschine und angezogener Feststellbremse in einem vorgegebenen Driftwinkel eine Kurve zu durchfahren, weil die Antriebsschlupfregelung (R) die Leistung der Brennkraftmaschine (B) nahezu vollständig wegregelt. Dieser Nachteil der beschriebenen Antriebsschlupfregelungen kann durch das erfindungsgemäße Verfahren zur Erkennung der Betätigung der Feststellbremse bei Kraftfahrzeugen behoben werden, wenn es als Teil der Antriebsschlupfregelung verwendet wird. Dies ist besonders einfach und kostengünstig, wenn die Antriebsschlupfregelung (R) zumindest teilweise als Mikrorechner ausgebildet ist und weil für die Erkennung der Feststellbremsbetätigung allein die Auswertung der Ausgangssignale der für die Antriebsschlupfregelung bereits vorhandenen Raddrehzahlfühler (1 bis 4) erforderlich ist.

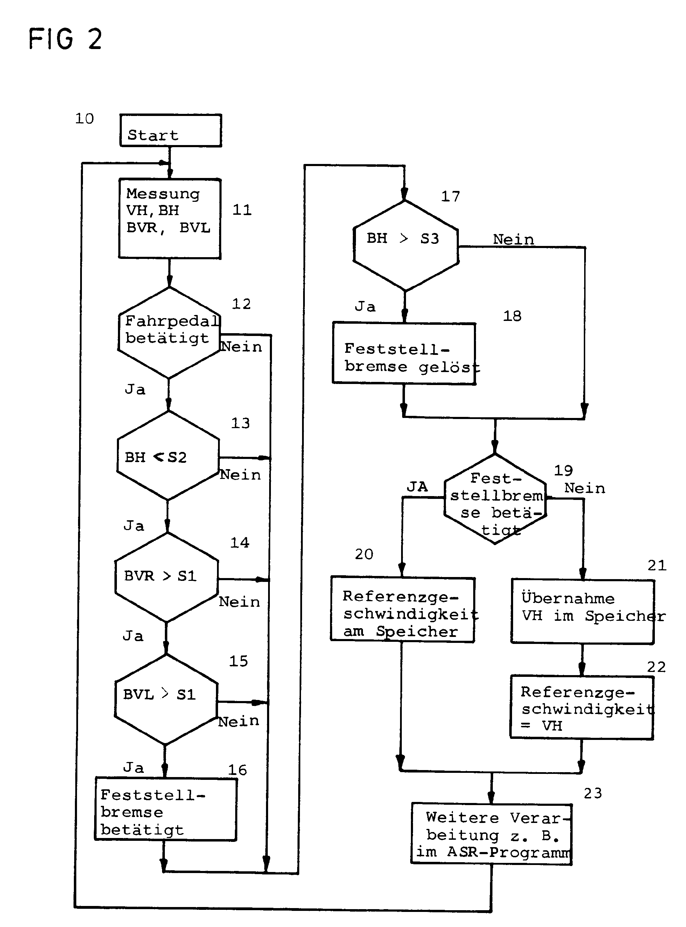

In Figur 2 ist ein Flußdiagramm des erfindungsgemäßen Verfahrens zum Erfassen der Betätigung und des Lösens der Feststellbremse des Kraftfahrzeuges gemäß Figur 1 dargestellt. Bei einem Block (10) wird das Verfahren gestartet. Als nächstes folgt im Verfahrensschritt (11) die Messung der Geschwindigkeit (VH) eines nicht angetriebenen Hinterrades, dessen Beschleunigung (BH) und die Messung der Beschleunigungen der angetriebenen Vorderräder (BVR) und (BVL). Die Messung der Geschwindigkeit (VH) des nicht angetriebenen Hinterrades, auf das die Feststellbremse wirkt, dient dazu, um die gemessene Geschwindigkeit ggfs. als Referenzgeschwindigkeit für die Antriebsschlupfregelung verwenden zu können. An den Verfahrensschritt (11) schließt sich ein Verfahrensschritt (12) an, in dem festgestellt wird, ob das Fahrpedal des Kraftfahrzeuges, das in der Figur 1 nicht dargestellt ist, betätigt wird. Ist dies nicht der Fall, das heißt, wird das Fahrpedal nicht betätigt, so wird in einem später beschriebenen Verfahrensschritt (17) fortgefahren. Wird das Fahrpedal betätigt, so wird als nächstes in einem Verfahrensschritt (13) die gemessene Beschleunigung (BH) des nicht angetriebenen Hinterrades mit einem zweiten Schwellwert verglichen, der im vorliegenden Ausführungsbeispiel -0,5 g beträgt. Ist die gemessene Beschleunigung (BH) nicht kleiner als der zweite Schwellwert (S2), so wird im Verfahrensablauf mit dem später zu beschreibenden Verfahrensschritt (17) fortgefahren. In diesem Falle liegt keine Betätigung der Feststellbremse vor.

Sollte die gemessene Beschleunigung des Hinterrades kleiner als der zweite Schwellwert (S2) sein, so wird als nächstes in einem Verfahrensschritt (14) geprüft, ob die Beschleunigung des angetriebenen rechten Vorderrades (BVR) größer als ein erster Schwellwert (S1) ist, der im vorliegenden Ausführungsbeispiel -0,2 g beträgt. Ist dies nicht der Fall, so wird ebenfalls von einer Nichtbetätigung der Feststellbremse ausgegangen und in einem Verfahrensschritt (17) fortgefahren. Ist die Beschleunigung (BVR) des rechten angetriebenen Vorderrades größer als der erste Schwellwert (S1), so wird als nächstes in einem Verfahrensschritt (15) überprüft, ob die Beschleunigung (BVL) des linken angetriebenen Vorderrades größer als der erste Schwellwert (S1) ist. Ist dies nicht der Fall, so wird die Ermittlung der Betätigung der Feststellbremse abgebrochen und mit dem Verfahrensschritt (17) fortgefahren. Ist jedoch der Beschleunigungswert (BVL) des linken angetriebenen Vorderrades größer als der erste Schwellwert (S1), der -0,2 g beträgt, so wird in einem Verfahrensschritt (16) festgestellt, daß die Feststellbremse betätigt ist.

Unabhängig davon, daß in dem Verfahrensschritt (16) festgestellt wurde, daß die Feststellbremse betätigt ist oder ob in den Verfahrensschritten (12 - 15) festgestellt wurde, daß die Feststellbremse nicht betätigt ist, wird in einem Verfahrensschritt (17) als nächstes die Beschleunigung (BH) des nicht angetriebenen Hinterrades, auf das die Feststellbremse wirkt, mit einem dritten Schwellwert (S3) verglichen, der im vorliegenden Ausführungsbeispiel etwa 1 g beträgt. Wird ermittelt, daß die Beschleunigung (BH) des nicht angetriebenen Hinterrades größer als dieser dritte Schwellwert (S3) ist, so wird in einem Verfahrensschritt (18) festgestellt, daß die Feststellbremse gelöst wurde. Ist die Beschleunigung (BH) des nicht angetriebenen Hinterrades kleiner als der dritte Schwellwert (S3), so wird ebenso wie nach dem Verfahrensschritt (18) mit einem Verfahrensschritt (19) fortgefahren, in dem ermittelt wird, ob die Betätigung der Feststellbremse erkannt wurde. Wurde die Betätigung der Feststellbremse erkannt, so wird in einem Verfahrensschritt (20) die Referenzgeschwindigkeit für die nachfolgende Antriebsschlupfregelung einem Speicher entnommen und in einem Verfahrensschritt (23) erfolgt die weitere Verarbeitung dieser Information z. B. in einem Antriebsschlupfregelungsprogramm. Wurde die Betätigung der Feststellbremse nicht erkannt, so erfolgt die Übernahme der aktuellen Radgeschwindigkeit (VH) des nicht angetriebenen Hinterrades in einen Speicher in einen Verfahrensschritt (21). In einem Verfahrensschritt (22) erfolgt dann die Übernahme der aktuellen Geschwindigkeit (VH) des nicht angetriebenen Hinterrades als Referenzgeschwindigkeit für die Antriebsschlupfregelung aus dem Speicher. Diese Information wird dann, wie vorher beschrieben, im Verfahrensschritt (23) z. B. für eine Antriebsschlupfregelung im Kraftfahrzeug weiter verarbeitet.

Nachdem die Antriebsschlupfregelung im Verfahrensschritt (23) tätig geworden ist, beginnt der beschriebene Verfahrensablauf mit der Messung der Geschwindigkeit (VH) und der Beschleunigung (BH) des nicht angetriebenen, aber durch die Feststellbremse betätigbaren Hinterrades und der Messung der Beschleunigungen (BVR) und (BVL) der angetriebenen Vorderräder von neuem.

In Figur 3 ist die Wirkung der in Figur 1 dargestellten Einrichtung mit einer Antriebsschlupfregeleinrichtung die das erfindungsgemäße Verfahren gemäß Figur 2 aufweist, anhand von zwei Diagrammen näher erläutert. In Figur 3a ist die Raddrehzahl (N), die der Radgeschwindigkeit (V) bis auf einer Konstante entspricht, gegen die Zeit (t) aufgetragen. Mit (VVR) ist die Geschwindigkeit des rechten angetriebenen Vorderrades bezeichnet. Mit (VVL) ist die Geschwindigkeit des linken angetriebenen Vorderrades bezeichnet. Mit (VMV) ist eine mittlere Geschwindigkeit der angetriebenen Vorderräder bezeichnet. Mit (VHR) ist eine Geschwindigkeit des rechten, nicht angetriebenen aber gebremsten Hinterrades (HR) bezeichnet. Mit (VHL) ist die Geschwindigkeit eines nicht angetriebenen aber durch die Feststellbremse gebremsten Hinterrades (HL) gekennzeichnet. (VMH) bezeichnet den Mittelwert der Geschwindigkeiten der nicht angetriebenen aber durch die Feststellbremse betätigbaren Hinterräder.

In Figur 3a ist angenommen, daß über die dargestellte Zeit die Geschwindigkeit der angetriebenen Vorderräder (VVR) und (VVL) im wesentlichen konstant ist. Dies gilt bis zu einem ersten Zeitpunkt (t1) auch für die Geschwindigkeit der nicht angetriebenen Hinterräder (VHR, VHL), wobei diese Geschwindigkeiten aufgrund des immer vorhandenen Schlupfes zwischen den angetriebenen Vorderrädern (VL und VR) immer etwas geringer ist als die gemessene Geschwindigkeit der angetriebenen Vorderräder (VR und VL). Es sei angenommen, daß zu dem ersten Zeitpunkt (t1) die Feststellbremse (6, 7) durch die Handbremsbetätigung (5) betätigt wird. Dann werden die nicht angetriebenen, jedoch durch die Feststellbremse gebremsten Hinterräder nahezu abrupt gestoppt, so daß zu einem zweiten Zeitpunkt (t2) die Hinterräder (HL) und (HR) stillstehen. Dieser Stillstand der Hinterräder (HR und HL) soll bis zu einem dritten Zeitpunkt (t3) dauern, zudem die Feststellbremse wieder gelöst wird. Als Folge des Lösens der Feststellbremse werden die Hinterräder (HR und HL) weder auf einen Wert beschleunigt, der bis auf den unvermeidlichen Schlupfbetrag durch den Schlupf der Vorderräder (VR und VL) auf dem Untergrund in etwa der Geschwindigkeit der Vorderräder (VR und VL) entspricht. Dies soll zu einem vierten Zeitpunkt (t4) geschehen sein.

Man erkennt in Figur 3a, daß mit Betätigung der Handbremse die gemessenen Geschwindigkeiten der Hinterräder nicht mehr die tatsächliche Geschwindigkeit des Kraftfahrzeuges über Grund kennzeichnen. Mit den in Figur 1 und 2 dargestellten Maßnahmen ist es nun möglich, daß die Antriebsschlupfregelung (R) die Betätigung der Feststellbremse erkennt und z. B. aus den gemessenen Geschwindigkeiten (VHR und VHL) der Hinterräder (HR und HL) vor Betätigung der Feststellbremse einen Mittelwert der Geschwindigkeit (VMH) bildet, der während der Betätigungszeit der Feststellbremse als Referenzwert, d. h. als tatsächliche Geschwindigkeit des Kraftfahrzeuges über Grund gewählt wird. Dies ist durch die durchgehende gestrichelte Linie der mittleren Geschwindigkeit (VMH) der nicht angetriebenen Hinterräder (HR und HL) angedeutet.

Die Erfassung der Betätigung der Feststellbremse erfolgt u. a. durch Messungen der Beschleunigung (BH) der Hinterräder, die nicht angetrieben sind, aber durch die Feststellbremse abgebremst werden. Die Beschleunigung (BH) der Hinterräder ist in Figur 3b gegenüber der Zeit (t) aufgetragen. Man erkennt, daß mit der Betätigung der Feststellbremse im Zeitpunkt (t1) die Beschleunigung (BH) der Hinterräder den zweiten vorgegebenen Schwellwert (S2) unterschreitet, was u. a. zur Erkennung der Betätigung der Feststellbremse führt. Sobald die Hinterräder (HR und HL) im Zeitpunkt (t2) den Stillstand erreicht haben, ist keine Beschleunigung mehr meßbar, da die Räder stehen. Das Lösen der Feststellbremse wird im Zeitpunkt (t3) u. a. dadurch erfaßt, daß zu diesem Zeitpunkt (t3) die positive Beschleunigung der Hinterräder den dritten vorgegebenen Schwellwert (S3) übersteigt. Dies ist solange der Fall, bis zu einem vierten Zeitpunkt (t4) die Hinterräder (HR und HL) in etwa wieder eine konstante Geschwindigkeit aufweisen und die Beschleunigung (BH) der Hinterräder (HR und HL) sich dem Wert 0 nähert.

## Patentansprüche

1. Verfahren zur Erfassung der Betätigung einer Feststellbremse eines frontgetriebenen Kraftfahrzeuges bei betätigtem Fahrpedal, dadurch gekennzeichnet, daß die Beschleunigungen (BVR, BVL) der angetriebenen Räder gemessen werden, daß die Beschleunigung (BH) eines nicht angetriebenen Rades, auf das die Feststellbremse wirkt, gemessen wird, daß die Beschleunigungen (BVR, BVL) der angetriebenen Räder mit einem ersten negativen Schwellwert (S1) verglichen werden, daß die Beschleunigung (BH) des nicht angetriebenen Rades mit einem zweiten negativen Schwellwert (S2) verglichen wird, der kleiner ist als der erste Schwellwert (S1) und daß die Betätigung der Feststellbremse (5, 6, 7) erkannt wird, wenn die Beschleunigungen (BVR, BVL) aller angetriebenen Räder größer sind als der erste Schwellwert (S1) und wenn die Beschleunigung (BH) des nicht angetriebenen Rades kleiner ist als der zweite Schwellwert (S2).

2. Verfahren nach Anspruch 1, dadurch gekennzeichnet, daß die Beschleunigungen (BHL, BHR) aller nicht angetriebenen Räder gemessen werden, auf die die Feststellbremse wirkt, daß die Beschleunigungen (BHL, BHR) dieser nicht angetriebenen Räder mit dem zweiten Schwellwert (S2) verglichen werden und daß die Betätigung der Feststellbremse (5, 6, 7) erkannt wird, wenn die Beschleunigung (BHL oder BHR) eines nicht angetriebenen Rades kleiner ist als der zweite Schwellwert (S2).

3. Verfahren nach Anspruch 1, dadurch gekennzeichnet, daß der erste Schwellwert (S1) etwa - 0,2 g beträgt und daß der zweite Schwellwert (S2) etwa - 0,5 g beträgt, wobei g die Erdbeschleunigung ist.

4. Verfahren nach Anspruch 1 oder Anspruch 2, dadurch gekennzeichnet, daß die Beschleunigungen (BH) des oder der nicht angetriebenen Räder mit einem dritten positiven Schwellwert (S3) verglichen werden, und daß das Lösen der Feststellbremse erkannt wird, wenn die Beschleunigung (BH) eines nicht angetriebenen Rades größer ist als der dritte Schwellwert (S3).

5. Verfahren nach Anspruch 4, dadurch gekennzeichnet, daß das Lösen der Feststellbremse erkannt wird, wenn die Beschleunigung (BHR, BHL) des nicht angetriebenen Rades, dessen Beschleunigung beim Erfassen der Betätigung der Feststellbremse kleiner war als der zweite Schwellwert (S2), größer ist als der dritte Schwellwert (S3).

6. Verfahren nach Anspruch 4 oder Anspruch 5, dadurch gekennzeichnet, daß der dritte Schwellwert (S3) etwa 1 g beträgt, wobei g die Erdbeschleunigung ist.

7. Verfahren nach Anspruch 1 oder Anspruch 2, dadurch gekennzeichnet, daß das Lösen der Feststellbremse erkannt wird, wenn die Geschwindigkeiten aller Räder oder deren Mittelwert kleiner ist als ein vorgegebener vierter Schwellwert.

8. Verfahren nach Anspruch 7, dadurch gekennzeichnet, daß der vierte Schwellwert etwa 4 km/h beträgt.

9. Verfahren nach Anspruch 1, dadurch gekennzeichnet, daß es bei einer Antriebsschlupfregelung verwendet wird.

10. Verfahren nach Anspruch 9, dadurch gekennzeichnet, daß die Geschwindigkeit (VH) eines nicht angetriebenen Rades gemessen wird, daß im Falle des Erkennens der Betätigung der Feststellbremse (5, 6, 7) die vor der Betätigung der Feststellbremse (5, 6, 7) gemessene Geschwindigkeit (VH) des nicht angetriebenen Rades abgespeichert wird und als Referenzgeschwindigkeit des Kraftfahrzeuges für die Antriebsschlupfregelung verarbeitet wird.

11. Verfahren nach Anspruch 10 und Anspruch 2, dadurch gekennzeichnet, daß der Mittelwert der gemessenen Geschwindigkeiten (VHL, VHR) aller nicht angetriebenen Räder gebildet wird.

12. Verfahren nach Anspruch 10 und Anspruch 4 oder Anspruch 7, dadurch gekennzeichnet, daß im Falle des Erkennens des Lösens der Feststellbremse (5, 6, 7) die abgespeicherte Referenzgeschwindigkeit gelöscht wird und die gemessene Geschwindigkeit (VH) des nicht angetriebenen Rades als Referenzgeschwindigkeit des Kraftfahrzeuges für die Antriebsschlupfregelung verarbeitet wird.

## Claims

1. Method for detecting the actuation of a parking brake of a front-driven motor vehicle when the accelerator pedal is operated,
characterised in that the accelerations (BVR, BVL) of the driven wheels are measured, that the acceleration (BH) of a non-driven wheel upon which the parking brake operates is measured, that the accelerations (BVR, BVL) of the driven wheels are compared with a first negative threshold value (S1), that the acceleration (BH) of the non-driven wheel is compared with a second negative threshold value (S2) which is smaller than the first threshold value (S1), and that the actuation of the parking brake (5, 6, 7) is recognised if the accelerations (BVR, BVL) of all the driven wheels are greater than the first threshold value (S1) and if the acceleration (BH) of the non-driven wheel is smaller than the second threshold value (S2).

2. Method according to claim 1, characterised in that the accelerations (BHL, BHR) of all the non-driven wheels are measured on which the parking brake operates, that the accelerations (BHL, BHR) of these non-driven wheels are compared with the second threshold value (S2) and that the actuation of the parking brake (5, 6, 7) is recognised if the acceleration (BHL or BHR) of a non-driven wheel is smaller than the second threshold value (S2).

3. Method according to claim 1, characterised in that the first threshold value (S1) is approximately -0.2 g and the second threshold value (S2) is approximately -0.5 g, where g is the gravitational acceleration.

4. Method according to claim 1 or claim 2, characterised in that the accelerations (BH) of the non-driven wheel or wheels are compared with a third positive threshold value (S3), and that the release of the parking brake is recognised if the acceleration (BH) of a non-driven wheel is greater than the third threshold value (S3).

5. Method according to claim 4, characterised in that the release of the parking brake is recognised if the acceleration (BHR, BHL) of the non-driven wheel, whose acceleration was smaller than the second threshold value (S2) when actuation of the parking brake was detected, is greater than the third threshold value (S3).

6. Method according to claim 4 or claim 5, characterised in that the third threshold value (S3) is approximately 1 g, where g is the gravitational acceleration.

7. Method according to claim 1 or claim 2, characterised in that the release of the parking brake is recognised if the speeds of all the wheels or the mean value thereof is smaller than a preset fourth threshold value.

8. Method according to claim 7, characterised in that the fourth threshold value is approximately 4 km/h.

9. Method according to claim 1, characterised in that it is used in controlling drive slip.

10. Method according to claim 9, characterised in that the speed (VH) of a non-driven wheel is measured, that in the event that actuation of the parking brake (5, 6, 7) is recognised the speed (VH) of the non-driven wheel measured prior to actuation of the parking brake (5, 6, 7) is stored and is processed as a reference speed of the motor vehicle for controlling drive slip.

11. Method according to claim 10 and claim 2, characterised in that the .mean value of the measured speeds (VHL, VHR) of all the non-driven wheels is formed.

12. Method according to claim 10 and claim 4 or claim 7, characterised in that in the event of the release of the parking brake (5, 5, 7) being recognised, the stored reference speed is deleted and the measured speed (VH) of the non-driven wheel is processed as the reference speed of the motor vehicle for controlling drive slip.

## Revendications

1. Procédé pour déceler l'actionnement d'un frein d'immobilisation d'un véhicule automobile à traction avant lorsque la pédale des gaz est actionnée, caractérisé par le fait que l'on mesure les accélérations (BVR, BVL) des roues motrices, par le fait que l'on mesure l'accélération (BH) d'une roue non motrice sur laquelle le frein d'immobilisation agit, par le fait que l'on compare les accélérations (BVR, BVL) des roues motrices à une première valeur de seuil négative (S1), par le fait que l'on compare l'accélération (BH) de la roue non motrice à une deuxième valeur de seuil négative (S2) qui est plus petite que la première valeur de seuil (S1) et par le fait que l'on reconnaît l'actionnement du frein d'immobilisation (5, 6, 7) si les accélérations (BVR, BVL) de toutes les roues motrices sont plus grandes que la première valeur de seuil (S1) et si l'accélération (BH) de la roue non motrice est plus petite que la deuxième valeur de seuil (S2).

2. Procédé selon revendication 1, caractérisé par le fait que l'on mesure les accélérations (BHL, BHR) de toutes les roues non motrices sur lesquelles le frein d'immobilisation agit, par le fait que l'on compare les accélérations (BHL, BHR) de ces roues non motrices à la deuxième valeur de seuil (S2) et par le fait que l'on reconnaît l'actionnement du frein d'immobilisation (5, 6, 7) si l'accélération (BHL ou BHR) d'une roue non motrice est plus petite que la deuxième valeur de seuil (S2).

3. Procédé selon revendication 1, caractérisé par le fait que la première valeur de seuil (S1) vaut environ -0,2 g et par le fait que la deuxième valeur de seuil (S2) vaut environ -0,5 g, g étant l'accélération de la pesanteur.

4. Procédé selon revendication 1 ou 2, caractérisé par le fait que l'on compare les accélérations (BH) des roues non motrices à une troisième valeur de seuil (S3) qui est positive et par le fait que l'on reconnaît le relâchement du frein d'immobilisation si l'accélération (BH) d'une roue non motrice est plus grande que la troisième valeur de seuil (S3).

5. Procédé selon revendication 4, caractérisé par le fait que l'on reconnaît le relâchement du frein d'immobilisation si l'accélération (BHR, BHL) de la roue non motrice dont l'accélération était plus petite que la deuxième valeur de seuil (S2) lors de la détection d'actionnement du frein d'immobilisation est plus grande que la troisième valeur de seuil (S3).

6. Procédé selon revendication 4 ou revendication 5, caractérisé par le fait que la troisième valeur de seuil (S3) vaut environ 1 g, g étant l'accélération de la pesanteur.

7. Procédé selon revendication 1 ou revendication 2, caractérisé par le fait que l'on reconnaît le relâchement du frein d'immobilisation si les vitesses de toutes les roues, ou leur valeur moyenne sont/est plus petite(s) qu'une quatrième valeur de seuil prédéterminée.

8. Procédé selon revendication 7, caractérisé par le fait que la quatrième valeur de seuil vaut environ 4 km/h.

9. Procédé selon revendication 1, caractérisé par le fait qu'il est utilisé dans le contexte d'un système d'antiblocage par régulation d'entraînement.

10. Procédé selon revendication 9, caractérisé par le fait que l'on mesure la vitesse (VH) d'une roue non motrice par le fait qu'en cas de reconnaissance de l'actionnement du frein d'immobilisation (5, 6, 7) on mémorise la vitesse de la roue non motrice mesurée (VH) avant l'actionnement du frein d'immobilisation (5, 6, 7) et on la traite en tant que vitesse de référence du véhicule pour le système d'antiblocage par régulation d'entraînement.

11. Procédé selon revendication 10 et revendication 2, caractérisé par le fait que l'on forme la moyenne des vitesses mesurées (VHL, VHR) de toutes les roues non motrices.

12. Procédé selon revendication 10 et selon revendication 4 ou revendication 7, caractérisé par le fait qu'en cas de reconnaissance du relâchement du frein d'immobilisation (5, 6, 7) on efface la vitesse de référence mémorisée et l'on utilise la vitesse mesurée (VH) de la roue non motrice en tant que vitesse de référence du véhicule pour le système d'antiblocage par régulation d'entraînement.
